## Europäisches Patentamt
## European Patent Office
## Office européen des brevets

(19)

(11) Numéro de publication: **0 056 759 B1**

(12) **FASCICULE DE BREVET EUROPEEN**

(45) Date de publication du fascicule du brevet: **18.07.84**

(51) Int. Cl.³: **C 25 B 15/08, C 25 B 9/00**

(21) Numéro de dépôt: **82400067.3**

(22) Date de dépôt: **15.01.82**

(54) **Dispositif d'alimentation et d'évacuation d'électrolyte liquide pour électrolyseur du type filtre-presse.**

(30) Priorité: **16.01.81 FR 8101102**

(43) Date de publication de la demande:
**28.07.82 Bulletin 82/30**

(45) Mention de la délivrance du brevet:
**18.07.84 Bulletin 84/29**

(84) Etats contractants désignés:
**AT BE CH DE FR GB IT LI LU NL SE**

(56) Documents cités:
**DE - A - 2 821 980**
**FR - A - 2 114 043**
**US - A - 3 421 996**
**US - A - 3 717 505**

(73) Titulaire: **CREUSOT-LOIRE, 42 rue d'Anjou, F-75008 Paris (FR)**

(72) Inventeur: **Pere, Gérard, 6 rue d'Essertenne, F-71670 Le Breuil (FR)**

(74) Mandataire: **Wind, Jacques et al, CREUSOT-LOIRE 15 rue Pasquier, F-75383 Paris Cedex 08 (FR)**

BUNDESDRUCKEREI BERLIN

# Description

La présente invention se rapporte à un dispositif d'alimentation et d'évacuation d'électrolyte pour électrolyseur du type filtre-presse, par exemple pour électrolyseur tel que concerné par les brevets FR-A-2 448 581 et FR-A-2 448 583 de la société demanderesse, ou bien tel que selon la demande DE-A-2 821 980.

Les électrolyseurs du type filtre-presse sont constitués d'un empilement de cellules élémentaires d'électrolyse, chaque cellule élémentaire étant constituée de deux plaques-électrodes métalliques et parallèles, écartées l'une de l'autre de manière à laisser un espace lui-même séparé en deux compartiments par un diaphragme plan et parallèle aux électrodes. Généralement, chaque cellule élémentaire est placée debout sur sa tranche et l'électrolyte circule de bas en haut: on recueille alors les mélanges liquide-gaz, dus aux réactions d'électrolyse dans le compartiment anodique d'une part et dans le compartiment cathodique d'autre part, dans la partie supérieure de la cellule d'électrolyse, d'où le mélange cathodique et le mélange anodique sont évacués séparément.

Dans un tel type d'électrolyseur, l'électrolyte est donc introduit dans la partie inférieure de chaque compartiment à l'aide d'au moins un canal d'amenée de faible section et est ensuite évacué dudit compartiment à la partie supérieure de celui-ci également à l'aide d'au moins un canal d'évacuation de faible section. On donne à ces canaux une faible section, dans la limite des impératifs hydrauliques, de manière à ce que le courant de fuite par ceux-ci soit le plus faible possible.

Par ailleurs, dans les électrolyseurs connus actuellement, chacun des canaux d'évacuation de cellule débouche dans un canal d'évacuation commun à toutes les cellules, un pour le catholyte et un pour l'anolyte, chacun de ces canaux étant parallèle à l'axe de la pile. De même, chacun des canaux d'amenée est issu, selon le cas, soit d'un seul canal commun d'amenée d'électrolyte (voir le brevet FR-A-2 448 584 précité), également parallèle à l'axe de la pile, soit d'un premier canal commun du même type, mais destiné aux compartiments anodiques et d'un second canal du même type, mais destiné aux compartiments cathodiques (voir le brevet FR-A-2 448 581 précité et la demande DE-A-2 821 980 précités).

Ces dispositifs classiques d'alimentation et d'évacuation d'électrolyte présentent deux oinconvénients préjudiciables au rendement de l'électrolyseur;

— d'une part cette alimentation et évacuation se fait sous des pressions ayant une composante dynamique bien plus élevée pour les cellules proches de l'entrée ou sortie de l'électrolyseur que pour les cellules qui en sont éloignées; en conséquence, les débits et par suite les pressions différentielles et les échauffements ne sont pas identiques pour toutes les cellules de la pile, ce qui est très préjudiciable non seulement au rendement de l'électrolyseur, mais encore à la durée de vie de celui-ci.,

— d'autre part, ce type d'alimentation par trois ou quatre canaux de distribution parallèles à l'axe de la pile introduit, du point de vue électrique, trois ou quatre résistance de faible valeur en parallèle sur l'électrolyseur, dans lesquelles circule un courant de fuite venant diminuer le rendement de l'électrolyseur par diminution du courant utile.

Le dispositif d'alimentation et d'évacuation d'électrolyte conforme à l'invention permet de pallier ces inconvénients, et par suite d'augmenter dans des proportions sensibles le rendement de l'électrolyseur, en le faisant par exemple passer, pour fixer les idées, d'une valeur voisine de 0,9 à une valeur voisine de 0,97. Un tel dispositif est du type comportant, pour un même ensemble de cellules juxtaposées:

— au moins un circuit d'amenée d'électrolyte, commun audit ensemble, duquel partent des canaux alimentant séparément chaque compartiment anodique et chaque compartiment cathodique,

— un circuit, commun audit ensemble, de départ d'anolyte, auquel aboutissent des canaux reliés séparément à chaque compartiment anodique,

— un circuit, commun audit ensemble, de départ de catholyte, auquel aboutissent des canaux relies séparément à chaque compartiment cathodique,

et il est caractérisé en ce qu'au moins un desdits circuits comporte au moins une chambre de transquillisation de faible section dans laquelle aboutissent tous les canaux associés audit circuit, ladite chambre de tranquillisation étant reliée à l'entrée ou à la sortie générale d'électrolyte par une conduite présentant au moins une partie de forme sinueuse de grande longueur et faible section, er réalisée dans le corps et autour de l'axe d'un cylindre dont une partie de la surface extérieure constitue une paroi de ladite chambre de tranquillisation.

L'invention sera mieux comprise à l'aide de la description suivante de deux exemples non limitatifs de réalisation, en référence aux dessins annexés dans lesquels:

— la fig. 1 est une vue en coupe-perspective d'une alimentation d'une portion d'électrolyseur conforme à l'invention,

— la fig. 2 montre le schéma électrique équivalent à une alimentation telle qu'apparaissant sur la fig. 1,

— la fig. 3 est une coupe longitudinale simplifiée d'un circuit d'alimentation, conforme à la configuration selon la fig. 1, du premier paquet de cellules d'un électrolyseur composé d'un empilement de plusieurs paquets,

— la fig. 4 est une coupe longitudinale simplifiée du circuit d'alimentation précédent, faite à hauteur de l'avant-dernier paquet et montrant le début du dernier paquet,

— la fig. 5 est une coupe longitudinale simplifiée du même circuit, faite à hauteur de l'extrémité du dernier paquet,

— la fig. 5a est une vue en coupe selon la direction AA de la fig. 5,

— la fig. 6 est une vue en bout du même circuit d'alimentation, selon la direction 10 de la fig. 1.

— la fig. 7 est une coupe longitudinale simplifiée d'une variante de circuit d'alimentation conforme à l'invention.

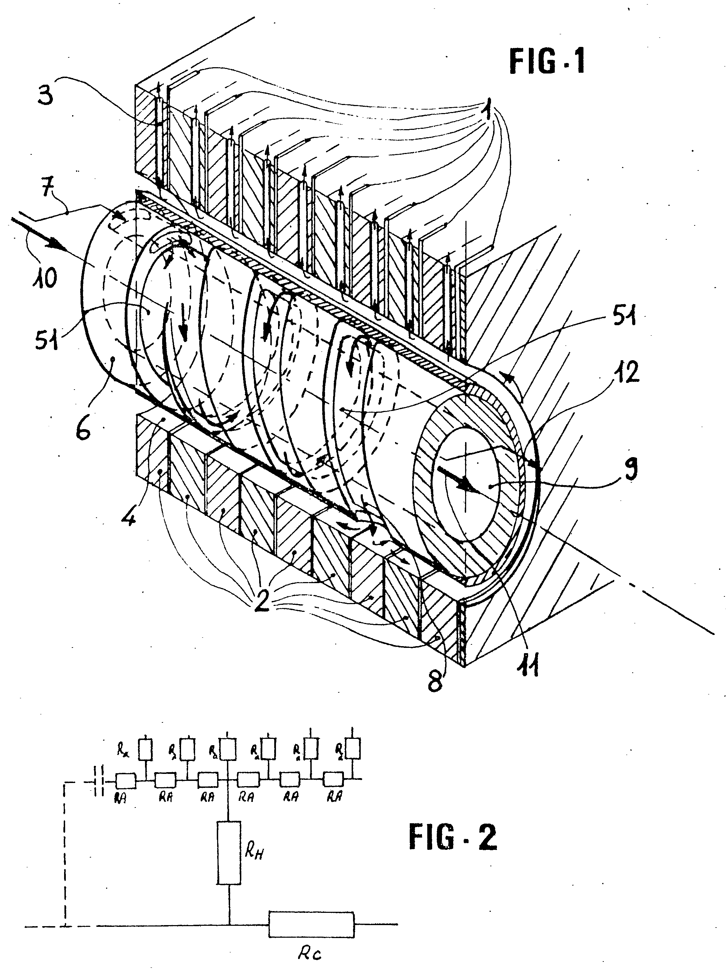

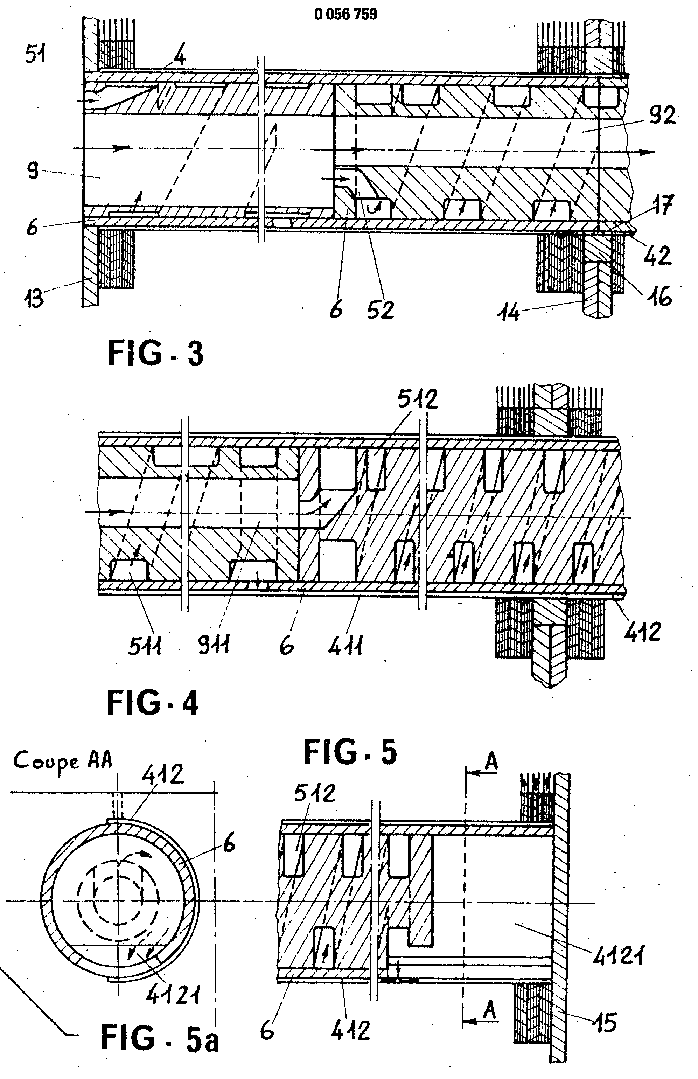

La vue persepective de la fig. 1 montre l'alimentation des compartiments anodiques de neuf des cellules d'un électrolyseur du type filtre-presse. Par exemple, l'alimentation représentée pourrait être celle des premières cellules du premier paquet constitutif d'un tel électrolyseur: dans cette hypothèse, l'empilement représenté comporterait, à son extrémité gauche, ou amont, la plaque cathodiqe d'extrémité reliée à la masse de l'installation. Cette plaque n'a pas été représentée sur la figure pour ne pas particulariser ni alourdir le dessin, mais elle est par contre visible sur la fig. 3 qui sera décrite ultérieurement.

On distingue d'abord sur le dessin les plaques-électrodes métalliques 1 et les plaques isolantes 2 formant joint et entretoise entre ces plaques. On distingue également les canaux 3 d'alimentation en électrolyte de chaque compartiment anodique. On n'a pas représenté, pour ne pas alourdir un dessin déjà très chargé, les diaphragmes situés dans la partie médiane entre les plaques-électrodes; pour le rappel du positionnement exact de ces diaphragmes, on se reportera à la partie supérieure de la fig. 3 du brevet français 2 448 583 précité.

Conformément maintenant à l'invention, et comme on le voit nettement sur le dessin, les canaux 3 sont alimentés en électrolyte à partir d'une chambre semi-annulaire 4 à section mince, que l'on appellera par la suite »chambre de tranquillisation«, dans laquelle l'électrolyte est amené par une conduite 51 en forme d'hélice de faible section, creusée à l'intérieur d'un tube 6 en matériau isolant et à paroi épaisse. Comme on le voit sur la figure, l'électrolyte pénètre dans l'hélice 51 comme indiqué par la flèche 7 et en sort dans la chambre 4 comme indiqué par la flèche 8. Par ailleurs la pièce 6 est percée d'un orifice central 9 définissant un canal longitudinal dans lequel circule l'électrolyte destiné à alimenter les paquets suivants, comme indiqué par les flèches 10 et 11, la flèche 12 indiquant le trajet de l'électrolyte alimentant la seconde hélice relative au deuxième paquet. Bien qu'on le l'ait pas représenté sur le dessin, on comprend aisément par ailleurs que la chambre de tranquillisation 4 est fermée à sa partie gauche, ou amont, par l'électrode d'extrémité, tel qu'il apparaitra clairement sur la fig. 3. Dans le cas où l'on aurait un électrolyseur ne comportant qu'un seul paquet, la chambre 4 serait fermée en aval par la seconde électrode d'extrémité, et le tube 6, qui ne comporterait alors pas d'orifice central 9, serait plein hormis l'espace intérieur pris par l'hélice 51. Dans notre cas l'électrolyseur comporte douze paquets et les chambres de tranquillisation de deux paquets adjacents sont communiquantes, comme il sera précisé ci-après.

On a représenté sur la fig. 2 le schéma électrique équivalent à une alimentation en électrolyte telle que celle de la fig. 1. Sur cette figure, les résistances Ra sont les résistance des canaux 3, les résistances RA sont les portions de résistance de la chambre 4 comprises entre deux canaux 3, la résistance RH est la réstistance de l'hélice 51, et la résistance Rc la résistance du canal 9 entre le point de départ et la seconde hélice. Dans la phrase qui précéde, on entend par »résistance« la résistance du canal, conduite, ou chambre, lorsque celui-ci ou celle-ci est rempli d'électrolyte.

En se reportant à l'ensemble des fig. 1 et 2, on voit que l'on a ainsi:

— créé une chambre de tranquillisation 4 qui permet, par annulation de la pression dynamique qui existait à l'entrée, d'assurer un débit d'électrolyte identique pour tous les canaux élémentaires.

— créé une matrice de résistances ayant une résistance équivalente plus élevée que les dispositifs antérieurs, d'une part parce que la résistance de la chambre de tranquillisation 4 est beaucoup plus élevée que celle de la conduite d'alimentation de l'art antérieur, et d'autre part parce que la résistance RH de l'hélice 51 est suffisamment grande pour que sa mise en parallèle sur les résistances RA ne diminue pas de manière trop importante la ladite chambre de tranquillisation.

Les fig. 3 à 6 permettent de se rendre compte avec encore plus de précision de la structure du reste de l'alimentation de l'électrolyseur, supposé constitué d'une douzaine de paquets de cinquante cellules pour fixer les idées.

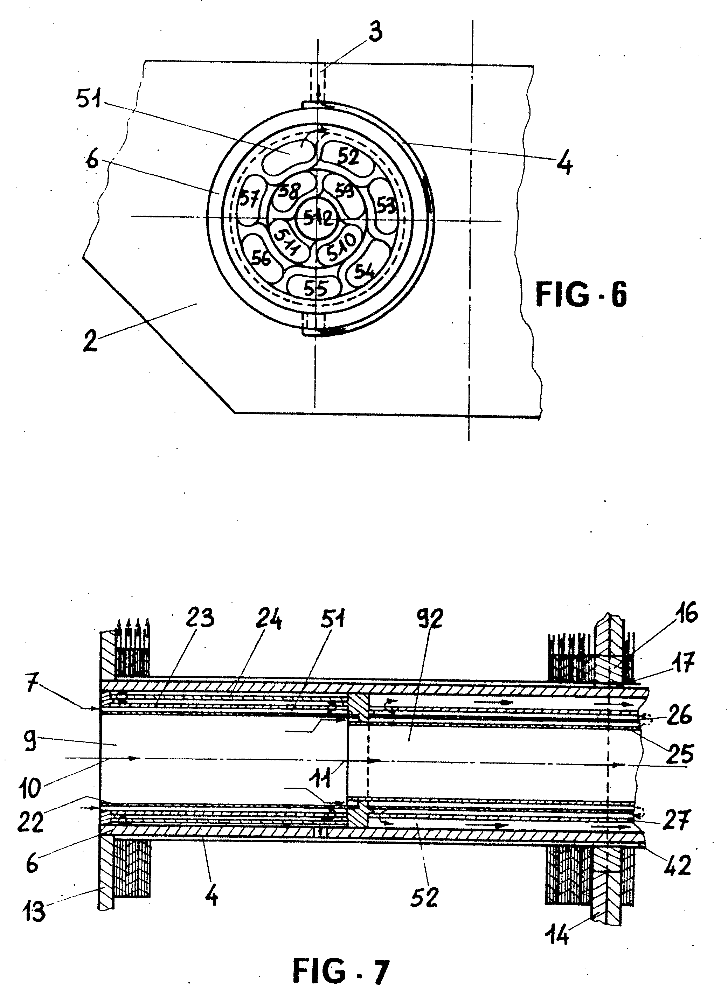

Sur la vue en coupe simplifiée de la fig. 3, on distingue, outre le tube 6, le canal 9, l'hélice 51, et la chambre 4 décrits précédemment en référence à la fig. 1, l'électrode d'extrémité 13, la plaque-électrode 14 délimitant l'autre extrémité du premier paquet, une partie de la seconde hélice 52 alimentant la seconde chambre de tranquillisation 42 relative au second paquet dont on distingue la naissance sur la droite de la figure, et la conduite longitudinale 92 ayant, comme l'avait le canal 9 pour le second paquet, pour rôle d'alimenter l'hélice 53 (fig. 6) qui alimentera elle-même le troisième paquet.

Par ailleurs, comme on le voit sur le dessin, les chambres de tranquillisation 4 et 42 son communiquantes, grâce à un passage annulaire 17 laissé entre un anneau isolant 16, monté à la base de la plaque-électrode 14, et le corps 6. De la sorte, on obtient une répartition hydraulique optimale de fluide entre les différentes chambres de tranquillisation, on diminue au maximum la pollution parasite due aux phénomènes d'électrolyse secondaire se produisant sur l'électrolyte se trouvant dans les chambres de tranquillisation, et l'on évite la corrosion des plaques-électrodes.

La compréhension de la fig. 4 découle aisément de ce qui précède. On y distingue en effet l'avant-dernière hélice 511 alimentant l'avant-dernière chambre de tranquillisation 411, le dernier canal longitudinal 911, et la dernière hélice 512 alimentant la chambre de tranquillisation 412 du douzième et dernier paquet, comme on le voit avec plus de précision sur la fig. 5, où l'on a également désigné par la référence 15 la plaque anodique d'extrémité de l'électrolyseur, reliée au pôle positif de l'alimentation électrique de celui-ci. On remarquera, en particulier sur la fig. 4, que tel que représenté artificiellement sur le dessin, l'hélice ne semble pas déboucher au milieu de la chambre de tranquillisation associée. Ceci n'est en réalité qu'une représentation conventionnelle destinée à ne pas agrandir exagérément les dimensions transversales du dessin: il va de soi qu'en réalité chaque hélice débouche dans le plan médian de la chambre de tranquillisation associée, ce qui permet une répartition optimale de fluide.

Par ailleurs, comme on le voit à l'aide des fig. 5 et 5a, la chambre de tranquillisation 412 relative au dernier paquet se termine par une portion 4121 de large section et en contact électrique direct avec l'électrode d'extrémité 15, ce qui a été trouvé avantageux aussi bien en ce qui concerne la diminution de la pollution due au phénomène d'électrolyse secondaire qu'en ce qui concerne la répartition des courants dans l'électrolyseur.

La vue en bout de la fig. 6 présente l'avantage de permettre de se rendre compte de la position des extrémités de départ des douze hélices (51 à 512) alimentant les douze chambres de tranquillisation de l'alimentation d'électrolyseur qui vient d'être décrite.

La fig. 7 est une coupe longitudinale simplifiée d'une variante de réalisation dans laquelle le conduit en forme d'hélice est remplacé par un conduit à trajet tourmenté réalisé à l'aide des tubes concentriques (22, 23, 24 et 25, 26, 27) ouverts alternativement à chaque bout de manière à laisser entre eux des espaces minces créant un labyrinthe de section étroite dans lequel l'électrolyte circule selon un trajet sinueux, comme on le voit d'ailleurs clairement sur le dessin où le chiffres de référence désignant des éléments correspondants ont été transcrits sur cette variante de réalisation.

Il va de soi que d'une part les deux exemples de conduites à trajet sinueux et à section mince donnés ci-dessus ne sont pas limitatifs, et que d'autre part ces deux types de conduite peuvent très bie être combinés, éventuellement avec d'autres, sur une même alimentation ou évacuation d'électrolyte d'un électrolyseur selon l'invention. De même les formes et sections desdites conduites et des chambres de tranquillisation pourront être variées en dimensions selon le cas, afin de tenir compte des impératifs d'écoulement hydraulique en particulier qui obligeront toujours à trouver un compromis, car l'on ne peut évidemment pas trop réduire les sections ni trop augmenter les longueurs de trajet.

## Revendications

1. Dispositif d'alimentation et d'évacuation d'électrolyte pour électrolyseur du type filtre-presse, comportant, pour un même ensemble de cellules juxtaposées:

— au moins un circuit d'amenée d'électrolyte, commun audit ensemble duquel partent des canaux alimentant séparément chaque compartiment anodique et chaque compartiment cathodique
— un circuit, commun audit ensemble, de départ d'anolyte, auquel aboutissent des canaux reliés séparément à chaque compartiment anodique
— un circuit, commun audit ensemble, de départ de catholyte, auquel aboutissent des canaux reliés à chaque compartiment cathodique,

caractérisé en ce qu'au moins un desdits circuits comporte au moins une chambre de tranquillisation (4) de faible section dans laquelle aboutissent tous lesdits canaux (3) associés audit circuit, ladite chambre de tranquillisation étant reliée à l'entrée ou à la sortie générale d'électrolyte par une conduite (51) présentant au moins une partie de forme sinueuse de grand longueur et faible section, et réalisée dans le corps et autour de l'axe d'un cylindre (6) dont une partie de la surface extérieure constitue une paroi de ladite chambre de tranquillisation.

2. Dispositif d'alimentation et dévacuation d'électrolyte selon la revendication 1, caractérisé en ce que ladite chambre de tranquillisation (4) est une chambre semi-annulaire à section mince en forme d'arc de cercle.

3. Dispositif d'alimentation et d'évacuation d'électrolyte selon la revendication 1, caractérisé en ce que ladite conduite (51) débouche au milieu de la chambre de tranquillisation (4).

4. Dispositif d'alimentation et d'évacuation d'électrolyte selon la revendication 1 ou la revendication 3, destiné à un électrolyseur réalisé sous la forme de plusieurs paquets de cellules juxtaposés, caractérisé en ce qu'il comporte une chambre de tranquillisation (4, 42 . . . 411, 412) et une conduite sinueuse (51, 52 . . . 511, 512) par paquet, lesdites chambres de tranquillisation étant toutes communiquantes, et en ce que ledit cylindre (6) est commun à tous les paquets et est percé de canaux longitudinaux (9, 92 . . . 911) communiquant bout à bout l'un avec l'autre, chaque canal de l'un des paquets communiquant avec ladite conduite sinueuse (51, 52 . . . 511, 512) d'un paquet adjacent. ·

5. Dispositif d'alimentation et d'évacuation selon la revendication 4, caractérisé en ce que la communication entre les chambres de tranquillisation de deux paquets adjacents s'effectue par un ou plusieurs passages (17) percés dans une pièce isolante (16) positionnée à la base des plaques-électrodes (14) délimitant lesdits paquets adjacents l'un par rapport à l'autre.

6. Dispositif selon la revendication 4, caractérisé en ce que la chambre de tranquillisation (412) relative au dernier paquet se termine par une portion (4121) de section élargie et en contact électrique direct avec l'électrode d'extrémité.

7. Dispositif d'alimentation et d'évacuation selon l'une quelconque des revendications 1 à 4, caractérisé en ce que la ou lesdites conduites sinueuses, ou au moins certaines d'entre elles, a ou ont une forme hélicoïdale.

8. Dispositif d'alimentation et d'évacuation selon l'une quelconque des revendications 1 à 4, caractérisé en ce que la ou lesdites conduites sinueuses ou au moins certaines d'entre elles, est (sont) constituée(s) par une série de tubes concentriques (22, 23, 24 et 25, 26, 27) séparés par des espaces minces et ouverts alternativement à chaque bout.

**Patentansprüche**

1. Vorrichtung zum Zuführen und Abführen bzw. Austragen von Elektrolyt für ein Elektrolysegerät des Typs Filter-Presse, mit einer Anordnung von nebeneinander angeordneten Zellen mit

- wenigstens einem für die Anordnung gemeinsamen Elektrolytzuführkreis, von welchem Kanäle ausgehen, die getrennt jede anodische und kathodische Abteilung speisen,
- einem für die Anordnung gemeinsamen Anolytauslaßkreis, in welchen Kanäle münden, die getrennt mit jeder der anodischen Abteilungen verbunden sind und
- einem für die Anordnung gemeinsamen Katholytauslaßkreis, in welchen Kanäle münden, die mit jeder der kathodischen Abteilungen verbunden sind,

dadurch gekennzeichnet, daß wenigstens einer dieser Kreise wenigstens eine Beruhigungskammer (4) von geringem Querschnitt aufweist, in welche alle diesem Kreis zugeordneten Kanäle (3) münden, und daß die Beruhigungskammer mittels einer Leitung (51) mit dem Einlaß oder dem allgemeinen Auslaß für den Elektrolyten verbunden ist, wobei die Leitung (51) wenigstens einen gewundenen bzw. schlangenförmigen bzw. sinusförmigen Abschnitt von großer Länge und geringem Querschnitt aufweist und im Körper und um die Achse eines Zylinders (6) ausgebildet ist, von welchem ein Abschnitt seiner Außenfläche eine Wand der Beruhigungskammer bildet.

2. Vorrichtung zum Zuführen und Abführen bzw. Austragen von Elektrolyt nach Anspruch 1, dadurch gekennzeichnet, daß die Beruhigungskammer (4) eine halbringförmige Kammer von geringem Querschnitt in Form eines Kreisbogens ist.

3. Vorrichtung zum Zuführen und Abführen bzw. Austragen von Elektrolyt nach Anspruch 1, dadurch gekennzeichnet, daß die Leitung (51) in der Mitte der Beruhigungskammer (4) mündet.

4. Vorrichtung zum Zuführen und Abführen bzw. Austragen von Elektrolyt nach Anspruch 1 oder 3, die für ein Elektrolysegerät in Form von mehreren Paketen von nebeneinander angeordneten Zellen bestimmt ist, dadurch gekennzeichnet, daß sie eine Beruhigungskammer (4, 42 . . ., 411, 412) und eine gewundene bzw. schlangenförmige bzw. sinusförmige Leitung (51, 52 . . . 511, 512) pro Paket aufweist, daß die Beruhigungskammern miteinander kummunizieren, daß der Zylinder (6) allen Paketen gemeinsam und von in Längsrichtung verlaufenden Kanälen (9, 92 . . . 911) durchsetzt ist, die Ende an Ende einer mit dem anderen in Verbindung stehen und daß jeder Kanal eines der Pakete mit der gewundenen Leitung (51, 52 . . . 511, 512) eines angrenzenden Paketes in Verbindung steht.

5. Vorrichtung zum Zuführen und Abführen bzw. Austragen nach Anspruch 4, dadurch gekennzeichnet, daß die Kommunikation zwischen den Beruhigungskammern von zwei aneinander angrenzenden Paketen durch einen oder mehrere Durchlässe (17) hergestellt ist, der (die) ein Isolierstück (16) durchsetzt (durchsetzen), das an der Basis von Plattenelektroden (14) angeordnet ist, welche die angrenzenden Pakete gegeneinander abgrenzen.

6. Vorrichtung nach Anspruch 4, dadurch gekennzeichnet, daß die dem letzten Paket zugeordnete Beruhigungskammer (412) in einen Abschnitt (4121) ausläuft, der erweiterten Querschnitt besitzt und in direktem elektrischem Kontakt mit der Endelektrode steht.

7. Vorrichtung zum Zuführen und Abführen bzw. Austragen nach einem der Ansprüche 1 bis 4, dadurch gekennzeichnet, daß die gewundene(n) Leitung(en) oder wenigstens einige von ihnen Schraubenform aufweist (aufweisen).

8. Vorrichtung zum Zuführen und Abführen bzw. Austragen nach einem der Ansprüche 1 bis 4, dadurch gekennzeichnet, daß die gewundene(n) Leitung(en) oder wenigstens einige von ihnen von einer Reihe von konzentrischen Rohren (22, 23, 24 und 25, 26, 27) gebildet ist (sind), die durch schmale Zwischenräume voneinander getrennt und abwechselnd an jedem Ende offen sind.

## Claims

1. A device for feeding and removing electrolyte for an electrolyser of the filter press type, comprising, for the same group of cells which are placed side by side:

— at least one circuit for electrolyte feed, common to the said group, from which channels feeding separately each anode compartment and each cathode compartment depart

— a circuit, common to the said group, for anolyte removal, at which arrive channels joined separately to each anode compartment

— a circuit, common to the said group, for catholyte, at which arrive channels joined to each cathode compartment,

characterised in that at least one of the said circuits comprises at least one calming chamber (4) of a small cross-section in which arrive all the said channels (3) associated with the said circuit, the said calming chamber being joined to the electrolyte general outlet or inlet by a duct (51) having at least one part of a sinous shape of a great length and small cross-section, and formed in the body and around the axis of a cylinder (6) a part of whose outer surface forms a wall of the said calming chamber.

2. A device for electrolyte feed and discharge according to claim 1, characterised in that the said calming chamber (4) is a semi-annular chamber of thin cross-section in the shape of an arc of a circle.

3. A device for electrolyte feed and discharge according to claim 1, characterised in that the said duct (51) opens into the middle of the calming chamber (4).

4. A device for electrolyte feed and discharge according to claim 1 or claim 3, intended for an electrolyser made in the form of several cell batteries placed side by side, characterised in that it comprises a calming chamber (4, 42 . . . 411, 412) and a sinous duct (51, 52 . . . 511, 512) per battery, the said calming chambers all being in communication, and in that the said cylinder (6) is common to all the batteries and is pierced with longitudinal channels (9, 92 . . . 911) all communicating with each other end-to-end, each channel of each of the batteries communicating with the said sinous duct (51, 52 . . . 511, 512) of an adjacent battery.

5. A feed and discharge device according to claim 4, characterised in that the communication between the calming chambers of two adjacent batteries is procued by one or several passages (17) pierced in an insulating component (16) positioned at the base of the electrode plates (14) bounding the said adjacent batteries in respect of each other.

6. A device according to claim 4, characterised in that the calming chamber (412) relative to the last battery ends in an part (4121) with a wider cross-section and in direct electrical contact with the end electrode.

7. A feed and discharge device according to any one of claims 1 to 4, characterised in that the said sinous duct or ducts, or at least some of them, is (or are) in the shape of a helix.

8. A feed and discharge device according to any one of claims 1 to 4, characterised in that the said sinous duct or ducts, or at least some of them, is (are) formed by a series of concentric tubes (22, 23, 24, and 25, 26, 27) separated by thin spaces and open alternately at each end.

FIG ·1

FIG · 2

**FIG . 3**

**FIG . 4**

**FIG . 5**

Coupe AA

**FIG . 5a**

**FIG · 6**

**FIG · 7**